# EUROPEAN PATENT APPLICATION

(11) **EP 1 143 648 A2**
(43) Date of publication of application: **10.10.2001**
(21) Application number: 01108161.9
(22) Date of filing: 30.03.2001
(51) Int. Cl.: H04H 1/10, H04H 9/00

(54) **Method and system for providing advertisements via a communication network**

(30) Priority: 30.03.2000 JP 2000095391
(71) Applicant: NEC CORPORATION, Tokyo (JP)
(72) Inventor: Ito, Noriko, Minato-ku, Tokyo (JP)
(74) Representative: von Samson-Himmelstjerna, Friedrich R., Dipl.-Phys.

(57) **Abstract**

A communication dealer terminal (10) stores advertisement data and consumer's position data and taste data, selects (A2) advertisement data on the basis of the position data, taste data and time, and transmits (A3) the selected advertisement data to consumers (101). Each consumer terminal (30) includes a means (31) for transmitting the position data to the communication dealer terminal (10), a means (36) for displaying received advertisement data, and a means (31) for transmitting a reservation request of a goods or the like selected by the consumer (101) from the advertisement data to the communication dealer terminal (10). A company terminal (40) includes a means (41) for transmitting advertisement data to the communication dealer terminal (10), and a means (42) for accepting a reservation request via the communication dealer (100) and executing a reservation process, a means for checking whether a consumer (101) coming to shop has requested a reservation, and a means for selling a goods or the like. Thus it is possible to make a pin-point distribution advertisement data taking consumer's time, position and taste into considerations and lead consumer's purchase requests to advertisement offerer (102).

## Description

### BACKGROUND OF THE INVENTION

This application claims benefit of Japanese Patent Application No. 2000-095391 filed on March 30, 2000, the contents of which are incorporated by the reference.

The present invention relates to data providing methods and, more particularly, to advertisement providing methods for providing consumer's position data and taste data to provoke consumer's purchase activities.

First food shops or the like have heretofore been practicing telephone reservation services. In this service, a consumer informs by telephone the time when he or she will come to a shop, and the shop does preparation of the goods (such as cooking food in a first food shop or the like) within the time until consumer's arrival. The consumer thus can get the prepared goods without waiting time.

In a portable telephone (so-called) i-mode service, a consumer can retrieve restaurant data on the internet system. The consumer thus can telephones a restaurant, which he or she is interested in as a result of retrieval on display, for reservation.

Furthermore, Japanese Patent Application No. 11-312487 discloses a system, in which portable terminals making use of broadcast data providing services can receive advertisement provided by taking the present time, and user's position data and taste data into considerations.

However, in the telephone reservation service, the consumer has to calculate by himself or herself the time necessary until arrival at a shop on the basis of such data as the place and telephone number of the shop and his or her own present position and inform the calculated time to the shop. In the portable telephone i-mode service, the consumer has to make a request to a restaurant after the restaurant retrieval. It has been impossible for the advertisement offerer to pin-point show advertisement data to target users. In the system disclosed in the Japanese Patent Application No. 11-312487, it is difficult for a company (project) offering an advertisement to grasp the comprehension factor and effect thereof.

### SUMMARY OF THE INVENTION

An object of the present invention, therefore, is to provide an advertisement providing system and an advertisement providing method capable of solving the above problems with an agency of communication dealer for pin-point distributing advertisement data taking consumer' s status (such as time, position and taste) into considerations and provoking consumer's purchase activities to attain advertisement effect.

According to an aspect of the present invention, there is provided an advertisement providing system comprising a communication line, one or more communication dealer terminals, one or more consumer terminals and one or more company terminals, these terminals being interconnected by the communication line, wherein: each communication dealer terminal includes a means for storing advertisement data and also consumer's position data and taste data, and a means for selecting advertisement data for each consumer by taking the consumer's position data and taste data and also time into considerations; each consumer terminal includes a means for displaying advertisement data received from each communication dealer terminal, a means for transmitting the consumer terminal's position data to the communication dealer terminal, and a means for transmitting reservation request data for a product or a service selected by the consumer on the basis of the advertisement data; and each company terminal includes a means for producing advertisement data and transmitting the produced advertisement data to the communication dealer terminal, a means for receiving the reservation request data via the communication dealer terminal and executing a reservation process, a means for making a check, when the consumer comes to the shop, as to whether the consumer has requested a reservation, and a means for allowing the company to sell a goods or a service to the consumer. Thus, it is possible to enhance consumer's will of purchase by pin-point distributing advertisement data taking consumer's status (such as time, position and taste) into considerations and attain advertisement effect by leading consumer's purchase requests to the advertisement offerer.

The communication dealer terminal transmits the advertisement data as electronic mail to the consumer terminal. It is thus readily possible to organize a system combined with existing systems.

The consumer terminal transmits the reservation request data as electronic mail to the communication dealer terminal. It is thus readily possible to organize a system combined with existing systems.

The communication dealer terminal transmits the reservation request data as electronic mail to the company terminal. It is thus readily possible to organize a system combined with existing systems.

The communication line is an internet system. It is thus possible to use existing communication infra.

The communication dealer terminal further includes a means for calculating a scheduled time of consumer's arrival at shop from the present position of the consumer, the position of the shop as described in the advertisement and the present time and transmitting the scheduled time data to the company. Thus, the consumer can get the desired item without waiting time when coming to the shop. It is thus possible for the company to expect purchase power increase.

The communication dealer terminal further includes a means for calculating advertisement effect from the contract of advertisement requested to it and transmitted reservation request data of consumers. Thus, the company can grasp advertisement effect.

The communication dealer terminal further includes a means for determining advertisement fee from the advertisement effect. Thus, it is possible to determine adequate advertisement fee.

According to another aspect of the present invention, there is provided an advertisement providing method comprising: a step for selecting advertisement data from the position data and taste data of a consumer and the time; a step for transmitting the advertisement data to the consumer; a step for showing the advertisement data to the consumer terminal; a step for transmitting the position data to the communication dealer; a step for transmitting a reservation request of a goods or a service to the communication dealer when the consumer thinks the goods or service to be his or her favorite item as a result of comprehending the advertisement data; a step for producing the advertisement data and transmitting the produced advertisement data to the communication dealer terminal; a step for accepting the reservation request of consumer from communication dealer; a step for executing a reservation process; a step for making a check as to whether the consumer has requested a reservation when the consumer appears at shop; and a step for selling a product or a service to the consumer. Thus, advertisement data taking consumer' s status (such as time, position and taste) into considerations can be pin-point distributed, so that it is possible to expect consumer's enhanced purchase will. It is also possible to enhance advertisement effect by leading consumer's purchase request to the advertisement offerer.

The advertisement is transmitted as electronic mail to the consumer. It is thus readily possible to organize a system combined with existing systems.

The consumer transmits the reservation contrast data as electronic mail to the communication dealer. It is thus readily possible to organize a system combined with existing systems.

The communication dealer transmits the reservation request data as electronic mail to the company. It is thus readily possible to organize a system combined with existing systems.

The consumer terminal, the communication dealer terminal and the company terminal are interconnected via an internet system. It is thus possible to use existing communication infra.

The communication dealer calculates the scheduled time of consumer's arrival at shop from the present position of the consumer, the position of the shop as described in the advertisement and the present time and transmits the scheduled time data to the company. Thus, the consumer appearing at the shop can get the desired goods without any waiting time, and the company can expect purchase power increase.

The communication dealer calculates advertisement effect factor from the contract of advertisement requested to the communication dealer and transmitted reservation request data of consumers. Thus, the company can grasp advertisement effect.

The communication dealer further comprises a step of determining advertisement fee from the advertisement effect factor. Thus, it is possible to determine adequate advertisement fee.

According to other aspect of the present invention, there is provided a communication dealer terminal for an advertisement providing system connected to consumer terminals and company terminals via an internet system comprising: a means for storing advertisement data from the consumers and also position data and taste data from the consumers; and a means for selecting advertisement data for each consumer from the considerations of the position data and taste data of the consumer and the time and transmitting the advertisement data to that consumer.

Other objects and features will be clarified from the following description with reference to attached drawings.

### BRIEF DESCRIPTION OF THE DRAWINGS

Fig. 1 schematically shows the basic model of an advertisement providing method in an embodiment of the present invention;
Fig. 2 is a block diagram showing the internal construction of a server in the communication dealer;
Fig. 3 is a block diagram showing the internal construction of a consumer's terminal;
Fig. 4 is a block diagram showing the internal construction of a company's terminal;
Fig. 5 is a flow chart illustrating the operation of the advertisement providing method in the embodiment of the present invention;
Fig. 6 is a format of the advertising data transmitted from the company to the consumer in an embodiment of the present invention;
Fig. 7 is a format of the advertising data transmitted from the communication dealer to the consumer in an embodiment of the present invention; and
Fig. 8 is a format of the reservation data transmitted from the communication dealer to the company in an embodiment of the present invention.

### PREFERRED EMBODIMENTS OF THE INVENTION

Preferred embodiments of the present invention will now be described with reference to the drawings.

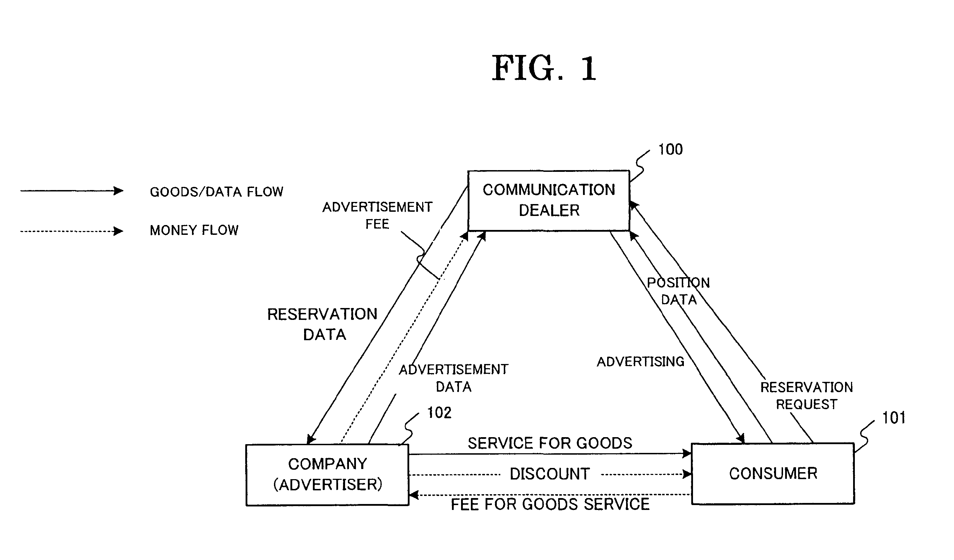

Fig. 1 schematically shows the basic model of an advertisement providing method in an embodiment of the present invention.

In this model, the advertisement providing method is represented such that it is constituted by communication dealer 100, consumers 101 which audio-video comprehend advertisement data provided from the communication dealer 100, and companies 102 which request advertisements to the communication dealer 100 and sell commercial goods to consumers 101. Flow of data is shown by solid arrows, and flow of money is shown by dashed arrows.

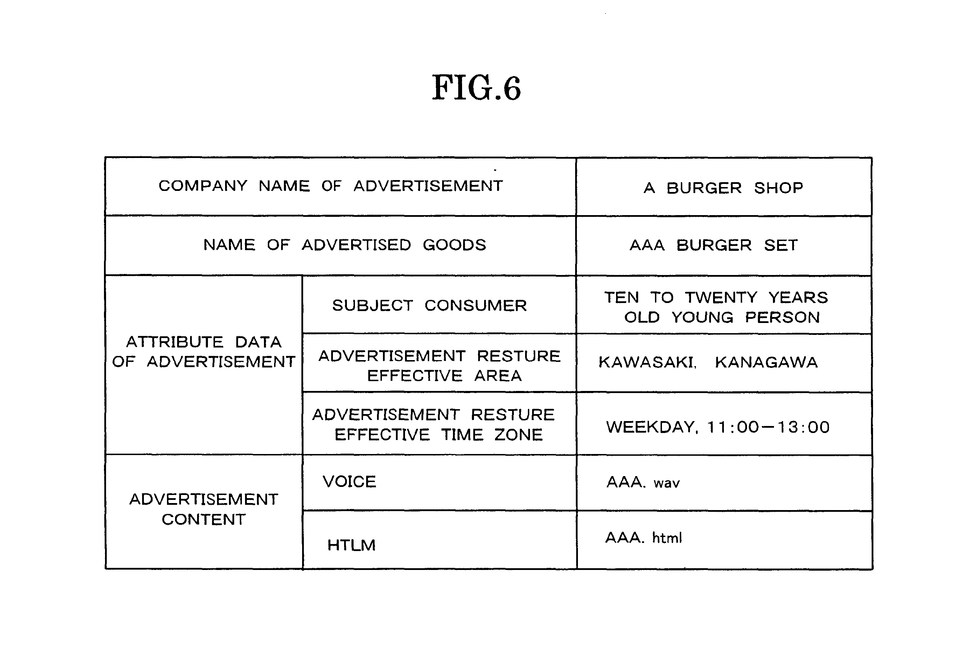

The communication dealer 100 enables transmitting WEB contents and mails via an internet system to portable terminals and i-mode portable telephone sets. The consumers 101 each has a portable terminal or a portable telephone set having a GPS output unit for outputting numerical longitude and latitude values. Each consumer 101 is assumed to be in such status that it can transmit its position data to the communication dealer intermittently for every predetermined interval of time. The companies 102 can provide advertisement data (see Fig. 6) to the communication dealer. The advertisement data includes such advertisement attribute data as, consumer's attribute data, effective advertisement distribution area data and effective advertisement distribution time zone data. The communication dealer distributes advertisements to only pertinent consumers to these advertisement attribute conditions. The companies 102 also are each assumed to have a mechanism, which can receive goods purchase reservation request data from the communication dealer at all times.

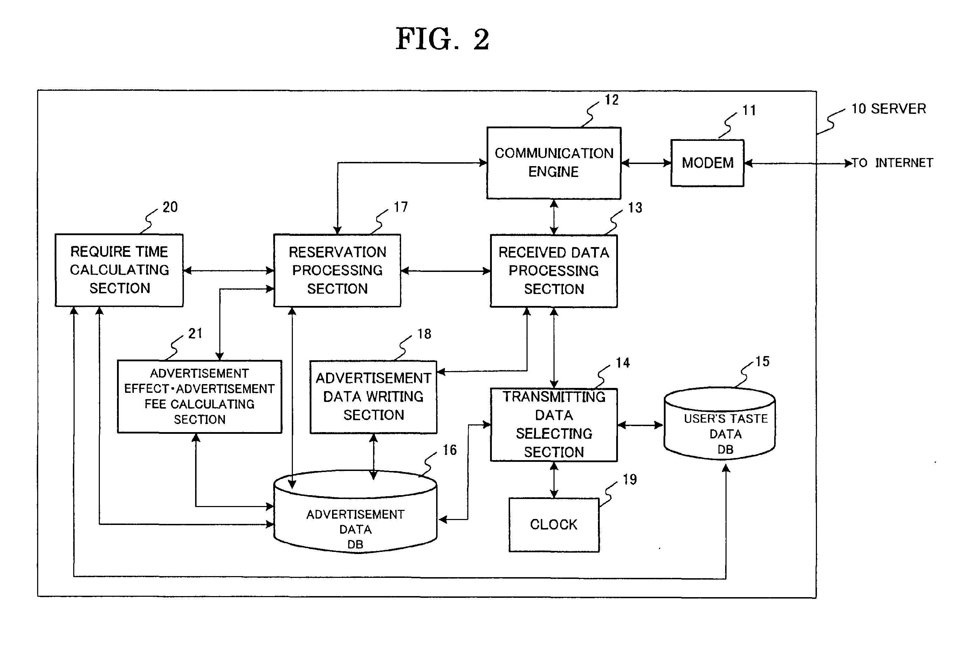

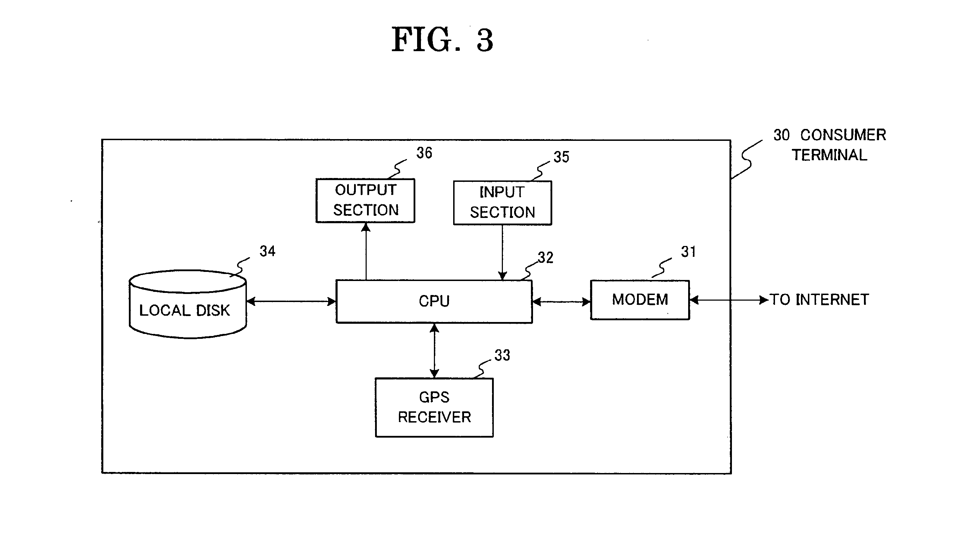

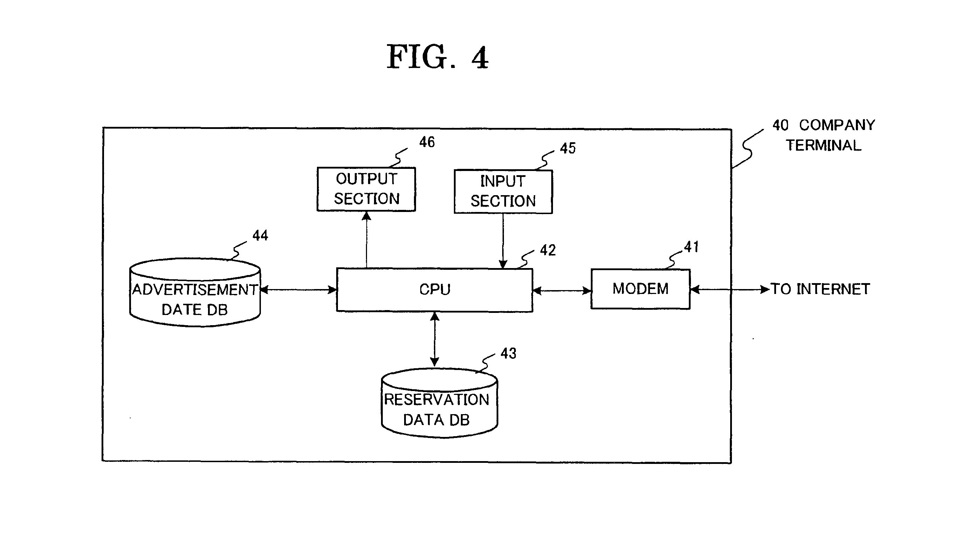

Fig. 2 is a block diagram showing the internal construction of a server in the communication dealer. Fig. 3 is a block diagram showing the internal construction of a consumer's terminal. Fig. 4 is a block diagram showing the internal construction of a company's terminal.

Referring to Fig. 2, the server 10 of the communication dealer includes a modem 11, a communication engine 12, a received data processing section 13, a transmitting data selecting section 14, a user's taste data database (DB) 15, an advertisement data database (DB) 16, a reservation processing section 17, an advertisement data writing section 18, a clock 19, and a required time calculating section 20 an advertisement effect/advertisement fee calculating section 21.

When advertisement data (see Fig. 6) is transmitted from a company 102 and received in the server, the advertisement data writing section 18 causes the received data to be stored via the modem 11, the communication engine 12 and the received data processing section 13 in the advertisement data base DB 16. The modem 11 receives position data and reservation data from consumers 101 and delivers the received data to the communication engine 12. The transmitting data selecting section 14, which recognizes the present time from the clock 19, extract data to be designated from the advertisement data DB 16 by taking user's taste data and user's position data into considerations, and feeds out the extracted data to the communication engine 12. When the reservation processing section 17 receives a user' s reservation request from the communication engine 12, it accesses the advertisement data DB 16 for reservation subject shop data, and instructs the communication engine 12 to transmit a reservation request mail. The advertisement effect/advertisement fee calculating section 21 calculates the advertisement effect and advertisement fee on the basis of user's reservation data and the advertisement contract data with the company.

Referring to Fig. 3, the terminal 30 of each consumer (user) 101 include a modem 31, a CPU 32, a GPS receiver 33, an input section 35, an output section 36 and a local disc 34. When advertisement data (see Fig. 6) is transmitted from the communication dealer 100 and received, the CPU 32 causes the received data to be stored in the local disc 34, and also feeds out the received data to the output section 36. When the input section 35 receives a reservation request input from a consumer 101, it accesses the local disc 34, then searches the advertisement data concerning the user's reservation request, and then transmits a reservation request together with the pertinent advertisement and the user's present position data obtained by the GPS receiver 33 via the modem 31 to the communication dealer 100.

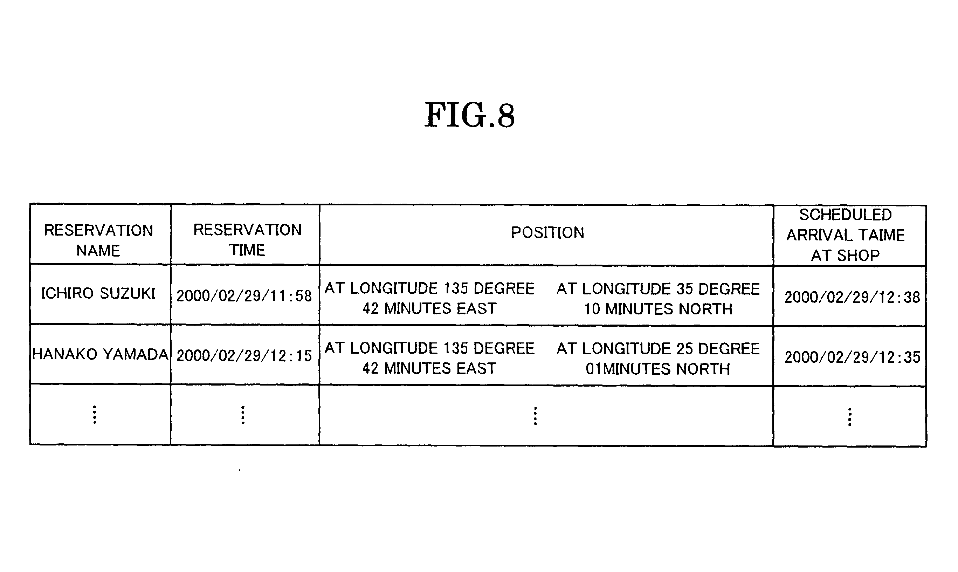

Referring to Fig. 4, the terminal 40 of each company 102 includes a modem 41, a CPU 42, a reservation data DB 43, an advertisement data DB 44, an input section 45 and an output section 46. The company 102 stores advertisement data produced in an advertisement agent or the like in the advertisement data DB 44 by using the input section 45. The CPU 42 causes the advertisement data (see Fig. 6) to be transmitted via the modem 41 to the communication dealer 100. When reservation data (see Fig. 8) of a consumer 101 is received from the communication dealer 100, the CPU 42 causes the received data to be stored in the reservation data DB 43.

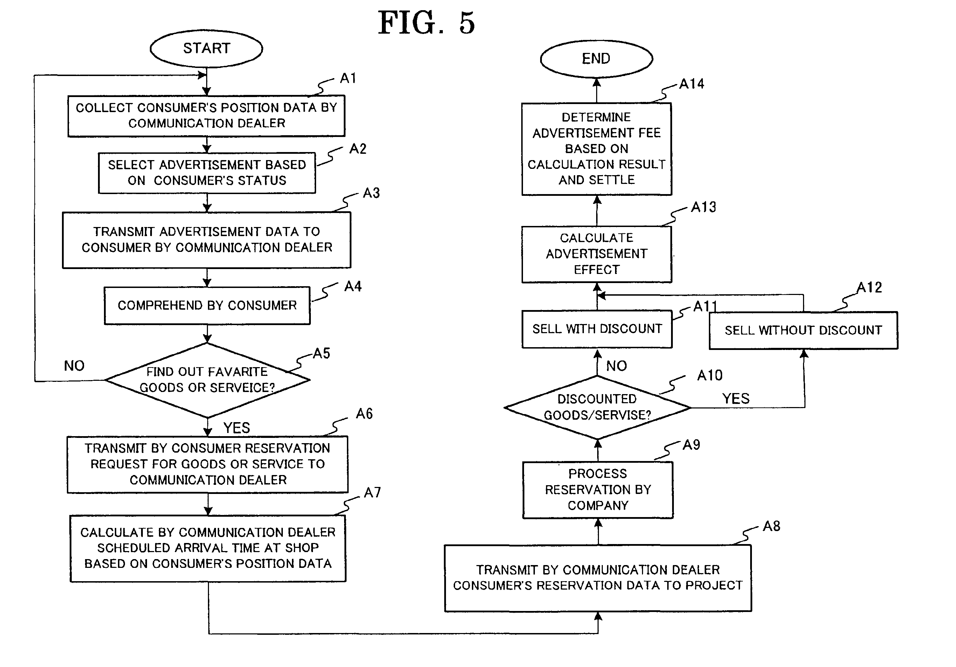

Fig. 5 is a flow chart illustrating the operation of the advertisement providing method in the embodiment of the present invention.

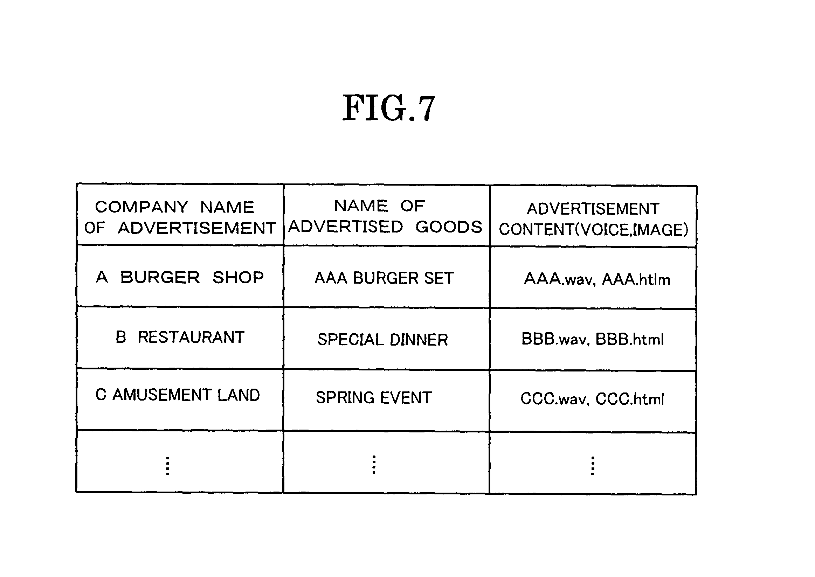

The overall operation of the embodiment of the present invention will now be described with reference to Figs. 1 to 8.

The communication dealer 100 collects position data (i.e., GPS output values) of consumers 101 (step A1 in Fig. 5). The communication dealer 100 searches for advertisements within contrast periods among those requested by companies 102, and selects advertisements to be provided in accordance with the status (such as position, present time and taste) of consumers 101 (step A2 in Fig. 5). The communication dealer 10 transmits advertisement data (see Fig. 6) to consumers 101 (step A3 in Fig. 5). For example, the communication dealer 100 transmits electronic mails, in which advertisement data or source position (URL) thereof is described.

Consumers 101 comprehend the advertisement data transmitted from the communication dealer 100 via portable terminals or portable telephone sets (step A4 in Fig. 5). For example, a consumer 101 comprehends the transmitted advertisement data on mail soft or WWW browser. When the consumer 101 finds out a favorite goods or service (step A5 in Fig. 5), he or she transmits a reservation request to the communication dealer 100 (step A6 in Fig. 5). For example, the consumer 101 transmits an electronic mail of the reservation request. As an example, the consumer 101 transmits the reservation request by depressing an automatic reservation request mail transmission button key on the WWW browser he or she is comprehending.

The communication dealer 100 transmits the reservation request data (see Fig. 8) of the consumer 101 to the pertinent company 102. At this time, the communication dealer 100 calculates the scheduled time of arrival at the shop from the position data of the consumer 101 (step A7 in Fig. 5), and transmits the result as well (step A8 in Fig. 5). For example, the communication dealer 100 transmits the reservation request data as electronic mail to the goods 102.

The company 102 processes the reservation (step A9 in Fig. 5). For example, the company 102, receiving the reservation request mail from the communication dealer 100, adds the reservation of the consumer 101 to a reservation list (i.e., reservation data DB 43 in Fig. 4) managed on its own side.

When the consumer 101 comes to the shop, the company 102 confirms the consumer 101 from the reservation list managed by itself, and effects the sale of the preserved goods or service. When the requested reservation has been accepted with a discount (step A10 in Fig. 5), the sale is effected with the discount (step A11 in Fig. 5). When the reservation has been accepted with any discount, the sale is effected without discount (step A12 in Fig. 5).

The communication dealer 100 calculates the advertisement effect by calculating the ratio of the purchase activity to the number of times of advertisement distribution (i.e., purchase link factor) with reference to the advertisement contract with the company 102 (step A13 in Fig. 5). For example, when the number of times of advertisement distribution is determined in the advertisement contract, the communication dealer 100 calculates the ratio of the number of reservations in an advertisement contract period to the number of times of advertisement distribution as purchase link factor. On the basis of this contract link factor and also the sales increase ratio between that before and after the advertisement distribution, the communication dealer 100 calculates the advertisement effect. On the basis of the calculation result, the communication dealer 100 determines the advertisement fee, and shows this fee to the company 102 for settlement (step A14 in Fig. 5).

As has been described in the foregoing, according to the present invention, the consumer can get advertisement data meeting his or her own status (such as time, position and taste) and readily make a reservation request. In addition, the company can obtain the advertisement data comprehension factor and consumer data, and can directly lead consumers to purchase activities after the advertisement data distribution. Furthermore, the company as advertisement offerer can grasp the advertisement effect.

Changes in construction will occur to those skilled in the art and various apparently different modifications and embodiments may be made without departing from the scope of the present invention. The matter set forth in the foregoing description and accompanying drawings is offered by way of illustration only. It is therefore intended that the foregoing description be regarded as illustrative rather than limiting.

## Claims

1. An advertisement providing system comprising a communication line, one or more communication dealer terminals (10), one or more consumer terminals (30) and one or more company terminals (40), these terminals being interconnected by the communication line, wherein:
each communication dealer terminal (10) includes a means (16, 15) for storing advertisement data and also consumer's position data and taste data, and a means (14) for selecting advertisement data for each consumer by taking the consumer, s position data and taste data and also time into considerations;
each consumer terminal (30) includes a means (36) for displaying advertisement data received from each communication dealer terminal (10), a means (31) for transmitting the consumer terminal's position data to the communication dealer terminal, and a means (31) for transmitting reservation request data for a product or a service selected by the consumer (101) on the basis of the advertisement data; and
each company terminal (40) includes a means (44, 42, 41) for producing advertisement data and transmitting the produced advertisement data to the communication dealer terminal, a means (41, 42) for receiving the reservation request data via the communication dealer terminal (10) and executing a reservation process, a means for making a check, when the consumer (101) comes to the shop, as to whether the consumer (101) has requested a reservation, and a means for allowing the company (102) to sell goods or a service to the consumer (101).

2. The advertisement providing system according to claim 1, wherein the communication dealer terminal (10) transmits the advertisement data as electronic mail to the consumer terminal (30).

3. The advertisement providing system according to claim 1, wherein the consumer terminal (30) transmits the reservation request data as electronic mail to the communication dealer terminal (10).

4. The advertisement providing system according to claim 1, wherein the communication dealer terminal (10) transmits the reservation request data as electronic mail to the company terminal (40).

5. The advertisement providing system according to claim 1, wherein the communication line is an internet system.

6. The advertisement providing system according to claim 1, wherein the communication dealer terminal (10) further includes a means (20) for calculating a scheduled time of consumer's arrival at shop from the present position of the consumer (101), the position of the shop as described in the advertisement and the present time and transmitting the scheduled time data to the company (102).

7. The advertisement providing system according to claim 1, wherein the communication dealer terminal (10) further includes a means (21) for calculating advertisement effect from the contract of advertisement requested to it and transmitted reservation request data of consumers (101).

8. The advertisement providing system according to claim 7, wherein the communication dealer terminal (10) further includes a means (21) for determining advertisement fee from the advertisement effect.

9. An advertisement providing method comprising:
a step (A2) for selecting advertisement data from the position data and taste data of a consumer (101) and the time;
a step (A3) for transmitting the advertisement data to the consumer (101);
a step for showing the advertisement data to the consumer terminal (30);
a step (A1) for transmitting the position data to the communication dealer (100);
a step (A6) for transmitting a reservation request of a goods or a service to the communication dealer (100) when the consumer (101) thinks the goods or service to be his or her favorite item as a result of comprehending (A4) the advertisement data;
a step for producing the advertisement data and transmitting the produced advertisement data to the communication dealer terminal (10);
a step for accepting the reservation request of consumer (101) from communication dealer (100);
a step (A9) for executing a reservation process;
a step for making a check as to whether the consumer (101) has requested a reservation when the consumer (101) appears at shop; and
a step (A11, A12) for selling a product or a service to the consumer (101).

10. The advertisement providing method according to claim 9, wherein the advertisement is transmitted as electronic mail to the consumer (101).

11. The advertisement providing method according to claim 9, wherein the consumer (101) transmits the reservation contrast data as electronic mail to the communication dealer (100).

12. The advertisement providing method according to claim 9, wherein the communication dealer (100) transmits the reservation request data as electronic mail to the company (102).

13. The advertisement providing method according to claim 9, wherein the consumer terminal (30), the communication dealer terminal (10) and the company terminal (40) are interconnected via an internet system.

14. The advertisement providing method according to claim 9, wherein the communication dealer (100) calculates the scheduled time of consumer's arrival at shop (A7) from the present position of the consumer, the position of the shop as described in the advertisement and the present time and transmits the scheduled time data to the company (102).

15. The advertisement providing method according to claim 9, wherein the communication dealer (100) calculates advertisement effect factor (A13) from the contract of advertisement requested to the communication dealer (100) and transmitted reservation request data of consumers (101).

16. The advertisement providing method according to claim 15, wherein the communication dealer (100) further comprises a step (A14) of determining advertisement fee from the advertisement effect factor.

17. A communication dealer terminal (10) for an advertisement providing system connected to consumer terminals (30) and company terminals (40) via an internet system comprising:
a means (15, 16) for storing advertisement data from the consumers (101) and also position data and taste data from the consumers (101); and
a means (14) for selecting advertisement data for each consumer (101) from the considerations of the position data and taste data of the consumer (101) and the time and transmitting the advertisement data to that consumer (101).
